# EUROPEAN PATENT APPLICATION

(11) **EP 3 503 506 A1**
(43) Date of publication of application: **26.06.2019**
(21) Application number: 18213833.9
(22) Date of filing: 19.12.2018
(51) Int. Cl.: H04L 29/08

(54) **LONG POLLING FOR CLUSTERED APPLICATION LOAD BALANCING**

(30) Priority: 19.12.2017 US 201715847211
(71) Applicant: Avaya Inc., Santa Clara, CA 95054-1233 (US)
(72) Inventor: MISHRA, Amit, Broomfield, Colorado 80023 (US); WILLIAMSON, Matt, Red Hook, New York 12571 (US); EZELL, Joel, Broomfield, Colorado 80023 (US); HASERODT, Kurt, Westminster, Colorado 80031 (US)
(74) Representative: Williams, David John

(57) **Abstract**

A plurality of long poll HTTP GET requests are received from a plurality of clustered applications. The plurality of long poll HTTP GET requests comprises a plurality of identifiers for the plurality of clustered applications. A plurality of event queues are created for the plurality of clustered applications based on the plurality of identifiers. A plurality of events are added to the plurality of event queues based on a plurality of communication sessions. For example, multiple events can be added to the plurality of event queues based on a plurality of incoming calls. A plurality of responses are sent based to the plurality of long poll HTTP GET requests. The plurality of responses includes the plurality of events. This process allows for identification of a corresponding clustered application that is managing a communication session.

## Description

### BACKGROUND

Cloud services that provide Communications Platform as a Service (CPaaS), such as, Twilio™ and Zang™, currently have security issues with applications running in enterprise data centers. CPaaS is a development framework that is used to add features such as voice, video, and messaging to applications. The current CPaaS systems send an HTTP request to access data in an enterprise data center. The incoming HTTP POST or HTTP GET request has to be handled by the enterprise data center.

Enterprise data centers are sensitive to incoming messages because they can cause security problems. As a result, enterprises try to minimize the number of applications initiating communications from the outside Internet. System administrators object to incoming requests to the enterprise and specifically want to limit requests to outbound messages directed to cloud services. System administrators don't want to open up the network to incoming traffic because it creates holes in a firewall that can be exploited.

One way to address the inbound HTTP problem is to use Websockets. Websockets can be established with outbound HTTP requests from the enterprise. After the initial outbound HTTP request, messages can flow both ways across the Websocket.

Some enterprises are sensitive to using Websockets. Certain reverse proxies and application frameworks are incapable of supporting Websockets. Additionally, some enterprises have application-aware reverse proxies and application delivery controllers that provide deep inspection of HTTP messages and their contents. Websockets defeat that capability since the messages can be formatted in any way that a developer chooses. For those reasons, it is necessary to support long-polling as a ubiquitously available technology for event delivery via HTTP.

Long polling is a well-understood method by which a client sends an HTTP GET request to the server and if there are events to be returned to the application, the events are sent immediately and another request is sent. If there are no events, the HTTP GET request is left open until there are events to return or a timeout occurs (e.g., 60 seconds). This gives the impression and characteristics of asynchronous events and also satisfies not having inbound requests to the enterprise data center. The only incoming messages are sent in response to outbound requests.

The difficulty with long polling arises in a clustered environment where multiple applications are being provided. Current solutions do not support long polling in a clustered environment.

### SUMMARY

These and other needs are addressed by the various embodiments and configurations of the present disclosure. A plurality of long poll HTTP GET requests are received from a plurality of clustered applications. The plurality of long poll HTTP GET requests comprises a plurality of identifiers for the plurality of clustered applications. A plurality of event queues are created for the plurality of clustered applications based on the plurality of identifiers. A plurality of events are added to the plurality of event queues based on a plurality of communication sessions. For example, multiple events can be added to the plurality of event queues based on a plurality of incoming calls. A plurality of responses are sent based to the plurality of long poll HTTP GET requests. The plurality of responses includes the plurality of events. This process allows for identification of a corresponding clustered application that is managing a communication session.

The phrases "at least one", "one or more", "or", and "and/or" are open-ended expressions that are both conjunctive and disjunctive in operation. For example, each of the expressions "at least one of A, B and C", "at least one of A, B, or C", "one or more of A, B, and C", "one or more of A, B, or C", "A, B, and/or C", and "A, B, or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material".

Aspects of the present disclosure may take the form of an entirely hardware embodiment, an entirely software embodiment (including firmware, resident software, microcode, etc.) or an embodiment combining software and hardware aspects that may all generally be referred to herein as a "circuit," "module" or "system." Any combination of one or more computer readable medium(s) may be utilized. The computer readable medium may be a computer readable signal medium or a computer readable storage medium.

A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

The terms "determine", "calculate" and "compute," and variations thereof, as used herein, are used interchangeably and include any type of methodology, process, mathematical operation or technique.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The preceding is a simplified summary to provide an understanding of some aspects of the disclosure. This summary is neither an extensive nor exhaustive overview of the disclosure and its various embodiments. It is intended neither to identify key or critical elements of the disclosure nor to delineate the scope of the disclosure but to present selected concepts of the disclosure in a simplified form as an introduction to the more detailed description presented below. As will be appreciated, other embodiments of the disclosure are possible utilizing, alone or in combination, one or more of the features set forth above or described in detail below. Also, while the disclosure is presented in terms of exemplary embodiments, it should be appreciated that individual aspects of the disclosure can be separately claimed.

### BRIEF DESCRIPTION OF THE DRAWINGS

Fig. 1 is a block diagram of a first illustrative system for long polling of clustered applications.
Fig. 2 is a flow diagram of a process for creating and deleting event queues for clustered applications.
Fig. 3 is a flow diagram of a process for assigning events to an event queue based on a communication session identifier.
Fig. 4 is a flow diagram of a process for handling HTTP long polling from clustered applications.
Fig. 5 is a flow diagram of a process for managing a number of events sent per long poll HTTP GET request.
Fig. 6 is a flow diagram of a process for bridging between a cloud service and clustered applications.

### DETAILED DESCRIPTION

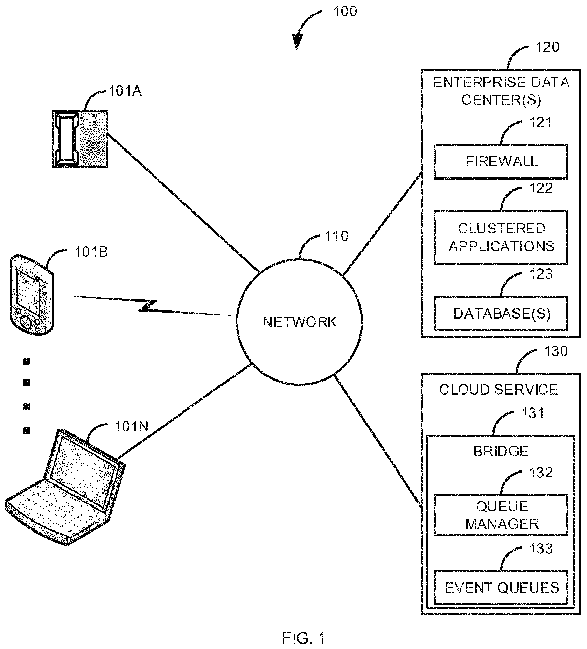

Fig. 1 is a block diagram of a first illustrative system 100 for long polling of clustered applications 122. The first illustrative system 100 comprises communication endpoints 101A-101N, a network 110, an enterprise data center 120, and a cloud service 130.

The communication endpoints 101A-101N can be or may include any communication endpoint device that can communicate on the network 110, such as a Personal Computer (PC), a telephone, a video system, a cellular telephone, a Personal Digital Assistant (PDA), a tablet device, a notebook device, a web server, a media server, a smartphone, a conference bridge, and the like. The communication endpoints 101A-101N are devices where a communication sessions ends. The communication endpoints 101A-101N are not network elements that facilitate and/or relay a communication session in the network 110, such as a communication manager or router. As shown in Fig. 1, any number of communication endpoints 101A-101N may be connected to the network 110.

The network 110 can be or may include any collection of communication equipment that can send and receive electronic communications, such as the Internet, a Wide Area Network (WAN), a Local Area Network (LAN), a Voice over IP Network (VoIP), the Public Switched Telephone Network (PSTN), a packet switched network, a circuit switched network, a cellular network, a combination of these, and the like. The network 110 can use a variety of electronic protocols, such as Ethernet, Internet Protocol (IP), Session Initiation Protocol (SIP), Integrated Services Digital Network (ISDN), Hyper Text Transport Protocol (HTTP), Web Real-Time Communication (WebRTC) protocol, and/or the like. Thus, the network 110 is an electronic communication network configured to carry messages via packets and/or circuit switched communications.

The enterprise data center(s) 120 can be or may include a data center for any entity, such as a corporation, a government, a partnership, a group, an association, an organization, a person, and/or the like. The enterprise data center(s) 120 may comprise a plurality of enterprise data centers 120 owned by the same entity or by different entities. In one embodiment, where there are multiple enterprise data centers 120, the enterprise data centers 120 may be identified based on an identifier for an individual data center 120.

The enterprise data center(s) 120 further comprise a firewall 121, clustered applications 122, and one or more databases 123. The firewall 121 can be or may include any hardware/software that can be used to prevent unauthorized access to the clustered applications 122/database(s) 123, such as a Network Address Translator (NAT), a proxy server, a session border controller, and/or the like..

The clustered applications 122 are a group of applications that can be used to provide services/information for communication sessions/services provided by the cloud service 130. The clustered applications 122 may provide various services, such as database services, Interactive Voice Response (IVR) services, agent identification services, call management services, and/or the like. The clustered applications 122 provide redundant services. For example, the clustered applications 122 may be a clustered IVR application.

The database(s) 123 can be or may include any type of database 123, such as, a relational database, a directory service, a file system, an object oriented database, and/or the like. The database(s) 123 are used by the clustered application(s) 122 as a result of having received a notification/request from the cloud service 130. For example, the database 123 may be a database 123 that contains information about customers of the enterprise (e.g., addresses, telephone numbers, credit card numbers, etc.).

The cloud service 130 can be or may include any service that can provide network based services, such as Communications Platform as a Service (CPaaS), Contact Center as a Service (CCaaS), application management services, consumer services, and/or the like. The cloud service 130 may provide cloud services for multiple enterprises based on long poll HTTP GETs sent from multiple enterprise data centers 120. The cloud service 130 further comprises a bridge 131.

The bridge 131 is a system/application that provides a bridge between the cloud service 130 and clustered applications 122. The bridge 131 further comprises a queue manager 132 and event queues 133.

The queue manager 132 can be or may include any hardware coupled with software than can manage the flow of information between the cloud service 130 and the enterprise data center(s) 120. The queue manager 132 manages events and data via the event queues 133.

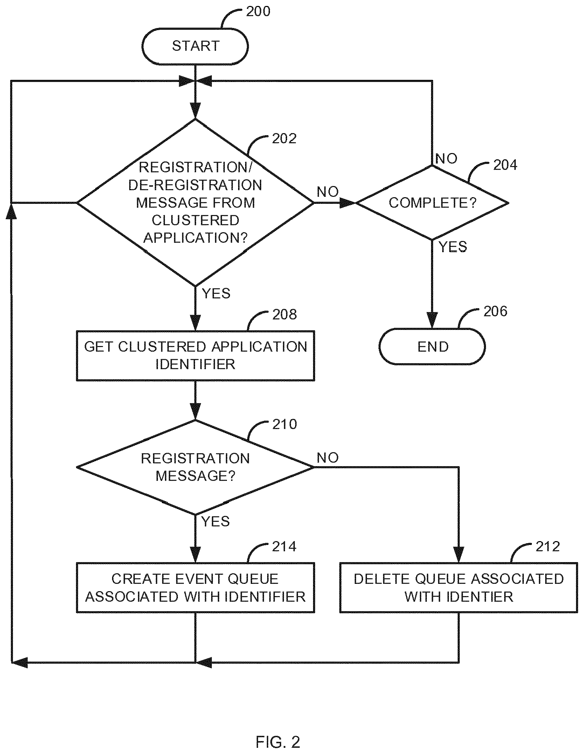

The event queues 133 can be or may include any hardware coupled with software that manages events for individual clustered applications 122. For example, if the enterprise data center 120 has three active clustered applications 122 (i.e., different instances of the same application), the cloud service 130 will have three corresponding event queues 133. If the cloud service 130 supported two enterprise data centers 120, each with three clustered applications 122, the bridge 131 will have six event queues 133 (two groups of three event queues 133) to support the two enterprise data centers 120. Separate enterprise data centers 120 can be identified based on an enterprise data center identifier that is used in the messages described in Figs 2-6.

Although not shown in Fig. 1, the bridge 131 may be separate from the cloud service 130. For example, the bridge 131 may be a separate application that runs on a separate server. Alternatively, the bridge 131 may run on a separate processor thread from the cloud service 130.

Fig. 2 is a flow diagram of a process for creating and deleting event queues 133 for clustered applications 122. Illustratively, the communication endpoints 101A-101N, the enterprise data center(s) 120, the firewall 121, the clustered applications 122, the database(s) 123, the cloud service 130, the bridge 131, the queue manager 132, and the event queues 133 are stored-program-controlled entities, such as a computer or microprocessor, which performs the methods of Figs. 2-6 and the processes described herein by executing program instructions stored in a computer readable storage medium, such as a memory (i.e., a computer memory, a hard disk, and/or the like). Although the methods described in Figs. 2-6 are shown in a specific order, one of skill in the art would recognize that the steps in Figs. 2-6 may be implemented in different orders and/or be implemented in a multi-threaded environment. Moreover, various steps may be omitted or added based on implementation.

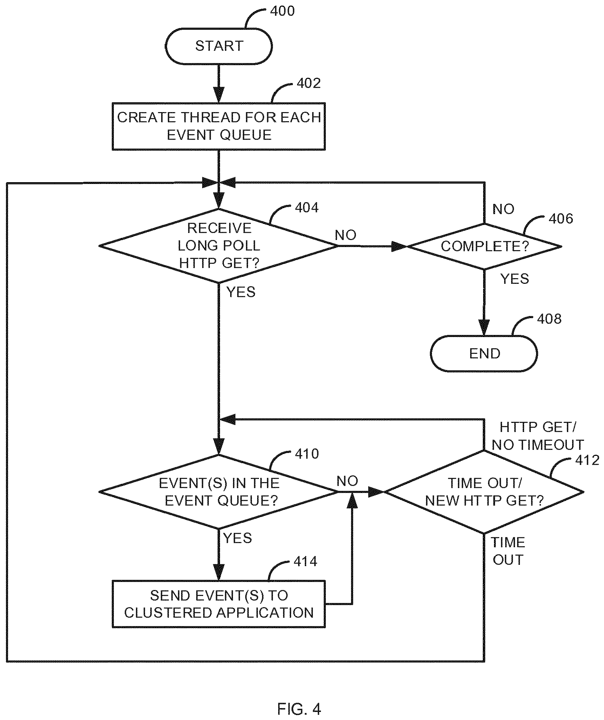

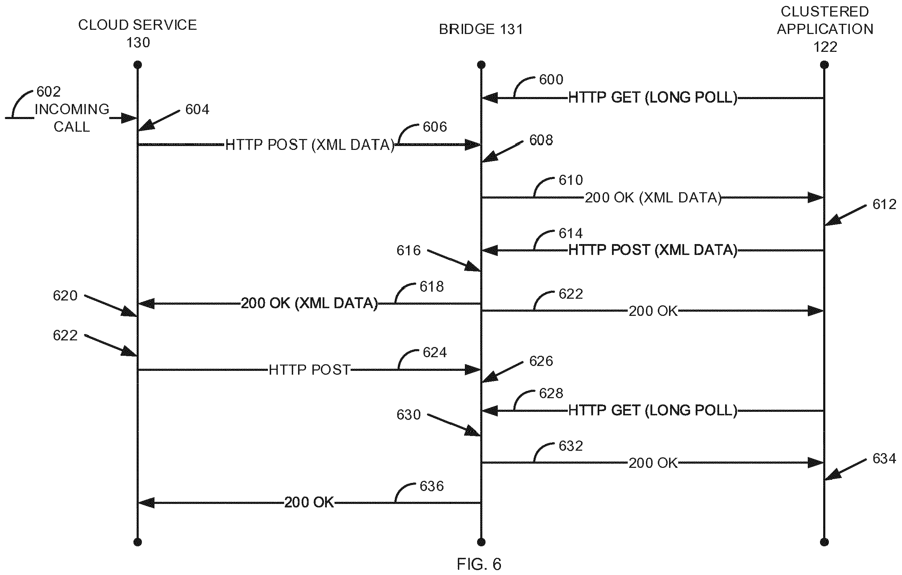

The process of Fig. 2 is from the perspective of the cloud service 130 (i.e., the bridge 131). The process starts in step 200. The queue manager 132 determines, in step 202, if a registration/deregistration message has been received from a clustered application 122. For example, when a clustered application 122 is first loaded, the clustered application 122 registers with the queue manager 132. Alternatively, when a clustered application 122 is taken down, the clustered application 122 sends a deregistration message. In one embodiment, the registration message/deregistration message may be a long poll HTTP GET request that is sent from the clustered application 122 (e.g., as described in Figs. 4 and 6). Alternatively, the registration/deregistration message may be an HTTP POST or other type of message.

If the registration/deregistration message is not received in step 202, the cloud service 130 determines if the process is complete in step 204. If the process is complete in step 204, the process ends in step 206. Otherwise, if the process is not complete in step 204, the process of step 202 repeats.

If a registration/deregistration message (e.g., a first long poll HTTP GET request from the clustered application 122) has been received in step 202, the queue manager 132 gets, in step 208, a clustered application identifier. The clustered application identifier uniquely identifies a specific clustered application 122 in the group of clustered applications 122. The clustered application identifier is in the received message of step 202. If the received message is a registration message, in step 210, the queue manager 132 creates an event queue 133 for the clustered application 122 based on the clustered application identifier in step 214. The process then goes back to step 202.

The event queues 133 that are created in step 214 are queues that are used to hold events that are used by the clustered application 122. The events in the event queues 133 typically include a session identifier associated with a specific communication session (e.g., a session identifier associated with a specific voice communication session). This way a specific clustered application 122 may support multiple communication sessions concurrently. In one embodiment, a separate event queue 133 may be created per communication session/clustered application 122. For example, an individual clustered application 122 may have multiple event queues 133 for multiple communication sessions (e.g., two separate voice communication sessions being handled by the individual clustered application 122).

If the message is a deregistration message, in step 210, the queue manager 132 deletes, in step 212, the event queue 133 for the clustered application 122 associated with the clustered application identifier. The process then goes to step 202.

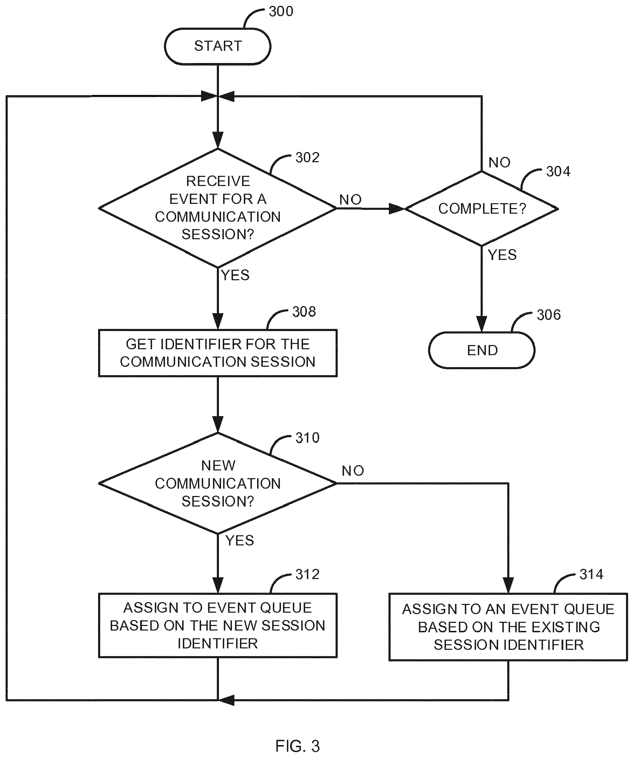

Fig. 3 is a flow diagram of a process for assigning events to an event queue 133 based on a communication session identifier. The process of Fig. 3 is from the perspective of the bridge 131. The queue manager 132 determines, in step 302, if an event has been received for a communication session. An event for a communication session can be or may include any type of event that can be associated with a communication session, such as, an indication of the receipt of a new call, the completion of playing an announcement, a collected Dual Tone Multi Frequency (DTMF) tone, the detection of a spoken phrase, a participant being dropped from a call, and/or the like.

If an event for a communication session is not received in step 302, the process determines if the process is complete in step 304. If the process is complete in step 304, the process ends in step 306. Otherwise, if the process is not complete in step 304, the process goes back to step 304 to wait to receive an event for a communication session.

If an event for a communication session is received in step 302, the queue manager 132 gets, in step 308, a session identifier for the communication session. The session identifier is a unique identifier that is used to uniquely identify a communication session, such as, Globally Unique Identifier (GUID), a unique call identifier, and/or the like. The queue manager 132 maps the session identifier to a specific event queue 133 associated with a specific clustered application 122. This is necessary for cases where there may be multiple events associated with an individual communication session. For example, a voice call may have a first event when the voice call is first established and a second event when the voice call is transferred or recorded. The queue manager 132 determines, in step 310, if the session identifier is for a new communication session. If the session identifier is for a new communication session, the queue manager 132 assigns the event to an event queue 133 in step 312. The assignment for event queue 133 may be based on various types of information, such as loading, a round-robin scheme, and/or the like. When the queue manager 132 assigns an event to an event queue 133 based on the session identifier, the queue manager 132 is assigning the communication session to a particular clustered application 122. The same clustered application 122 typically manages all events for an individual communication session. The process then goes back to step 302.

Otherwise, if the session identifier is for an existing communication session (i.e., where a previous event for the communication session has already assigned to an event queue 133 and is still active) in step 310, the queue manager 132 assigns the event to the same event queue 133 as previous events for the same communication session (based on the session identifier) in step 314. The process then goes to step 302.

Fig. 4 is a flow diagram of a process for handling HTTP long polling from clustered applications 122. The process starts in step 400. When an event queue 133 is created, in step 214, the queue manager 132 creates, in one embodiment, a separate processor thread for each created event queue 133 in step 402. The queue manager 132 waits, in step 404, to receive a long poll HTTP GET request from the clustered application 122 that is assigned to the event queue 133.

A long poll HTTP GET request is where the clustered application 122 sends the HTTP GET request and waits for a time period (e.g., two minutes) to receive a response from the queue manager 132. If a response is not received within the time period, a new HTTP GET request is sent by the clustered application 122. The purpose of using an HTTP GET request is so that the clustered application 122 initiates the communication session with the cloud service 130 using the outgoing HTTP socket (port 80). This provides enhanced security to the firewall 121 because the communication session is initiated from within the enterprise (a trusted source). If the communication session was initiated from the cloud service 130, a new port may have to be opened on the firewall 121. This results in a potential security breach if another entity (e.g., using a man-in-the-middle attack) comprises an incoming HTTP GET request /POST. The result may be the loss of data to the man-in-the-middle attacker because the address of the HTTP GET request may have been changed by the man-in-the-middle attacker.

If a long poll HTTP GET request is not received in step 404, the process determines if the process is complete (e.g., the event queue 133 is deleted in step 212) in step 406. If the process is complete in step 406, the process ends in step 408. Otherwise, if the process is not complete in step 406, the process repeats step 404.

If a long poll HTTP GET request is received in step 404, the queue manager 132 determines if there are any events in the event queue 133 in step 410. If there are not any events in the event queue 133 in step 410, the queue manager 132 determines in step 412 if there has been a time out (a time period for not receiving a long poll HTTP GET request) or if a new long poll HTTP GET request has been received from the clustered application 122 associated with the event queue 133. If a new long poll HTTP GET request has been received and a timeout has not occurred in step 412, the process goes back to step 410. Otherwise, if a timeout has occurred in step 412, the process goes back to step 404.

If there are one or more events in the event queue 133 in step 410, the queue manager 132 sends the one or more events in the event queue 133 to the clustered application 122 in step 414. The process then goes back to step 412.

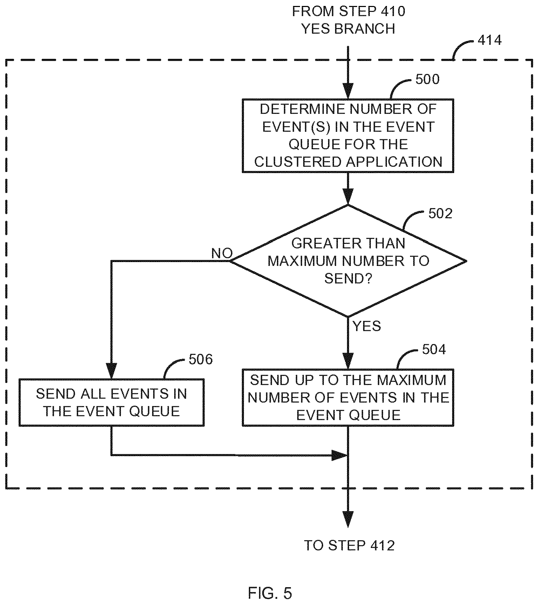

Fig. 5 is a flow diagram of a process for managing a number of events sent per long poll HTTP GET request. The process of Fig. 5 is one exemplary embodiment of step 414 of Fig. 4. After determining that there are one or more events in the event queue 133 in step 410, the queue manager 132 determines the number of events in the event queue 133 in step 500. The queue manager 132 determines, in step 502, if the number of events in the event queue 133 is greater than the maximum number to send. The maximum number of events in the event queue 133 can be any number from one to N where N is an integer. The maximum number of events may be defined by an administrator or other entity.

If the number of events in the event queue 133 is greater than the maximum number of events, the queue manager 132 sends up to the maximum number of events in the event queue 133 to the clustered application 122 in step 504. The process then goes to step 412.

Otherwise, if the number of events in the event queue 133 is not greater than the maximum number of events, the queue manager 132 sends all events in the event queue 133 to the clustered application 122 in step 506. The process then goes to step 412.

The types of events that are sent in steps 504 and 506 may be events that are for the same communication session and/or for multiple communication sessions. For example the events sent in step 504/506 may be for the same communication session. In one embodiment, the maximum number of events may also be based on an individual communication session. For example, if an individual clustered application 122 is currently handling two communication sessions, there may be a maximum number based on each communication session that the clustered application 122 is handling (e.g., one event for the first communication session and two events for the second communication session).

The process of Fig. 5 may have different maximum numbers for different event queues 133. For example, a first event queue 133 may have a maximum number of one event and a second event queue 133 may have a maximum number of two events. In one embodiment, the different maximum numbers may be for the same types of clustered applications 122 or for different types of clustered applications 122 that in the same enterprise data center 120.

In one embodiment, the maximum number difference may be based upon different two different enterprise data centers 120. For example, clustered applications 122 in a first enterprise data center 120 may have a maximum number of one event and clustered applications 122 in a second enterprise data center may have a maximum of two events. The clustered applications 122 in the first data center 120 may be the same or different types of clustered applications 122. For example, the clustered applications 122 in the first and second enterprise data centers 120 may be for the same clustered IVR application. Alternatively, the clustered applications 122 in the first data center 120 may be a clustered database application and the clustered applications 122 in the second data center 120 may be a clustered call recording application. In these examples, each enterprise data center 120 uses a unique enterprise identifier to distinguish between clustered applications 122 in the different enterprise data centers 120.

Fig. 6 is a flow diagram of a process for bridging between the cloud service 130 and the clustered applications 122. The purpose of the bridge 131 is to minimize the necessary changes required to the software for the cloud service 130 and the clustered application 122.

The process starts in step 600 when the clustered application 122 initially sends a long poll HTTP GET request (in one embodiment, this may be a long poll HTTP POST request). The long poll HTTP GET request of step 600 is sent to wait until data is ready (i.e., an event/data) to be sent to the clustered application 122. An incoming call is received, in step 602, at the cloud service 130. For example, the incoming call may be an incoming call from the communication endpoint 101A. The incoming call may be a voice call, a video call, a multimedia call, an Instant Messaging (IM) call, and/or the like.

In response to receiving the incoming call, the cloud service 130 determines, in step 604, based on rules, which clustered application 122 must be notified of the incoming call (the event). For example, the incoming call may be a voice call to a clustered IVR application 122. Once it has determined which clustered application 122 must be invoked, the cloud service 130 sends, in step 606, an HTTP POST to the bridge 131. The HTTP POST of step 606 also includes a session identifier of the incoming call. The session identifier uniquely identifies the incoming call.

In one embodiment the HTTP post of step 606 may also comprise data (e.g., in Extended Markup Language (XML) format). The presence of the data (XML in this example) indicates that the cloud service 130 is expecting response data (sent in step 614) from the clustered application 122. Although described using XML, other formats of data may be used, such as JavaScript Object Notation (JSON). The response data can be different types of response data. For example, the response data may be data from the database 123, data gathered from an IVR system, an agent identifier, and/or the like.

The bridge 131 assigns the event to an event queue 133 (i.e., as described in Fig. 3 steps 312/314) in step 608 based on the session identifier. Based on the long poll HTTP GET request of step 600, the bridge 131 sends a 200 OK, in step 610, to the clustered application 122 that includes the session identifier/event (i.e., as described in step 414). If the HTTP POST of step 606 contains XML data, the 200 OK also includes the XML data in step 610. The clustered application 122 then executes, in step 612, based on the event/XML data sent in step 610. For example, the clustered application 122 could take the caller ID from the new call notification message, look up some information about the caller from a database 123 in step 612, and use that information to create an XML command to play a custom greeting to the caller.

The clustered application 122 sends, in step 614, an HTTP POST with the XML data/session identifier to the bridge 131. The bridge 131 gets the session identifier/XML data from the HTTP POST in step 616. The bridge 131 sends, in step 618, a 200 OK in step 618. If the HTTP POST of step 606 contained XML data (i.e. the command to play the custom greeting), the 200 OK also includes XML data (e.g., data from the database 123). The cloud service 130 then uses the XML data in step 620. The bridge 131 also sends a 200 OK message to the clustered application 122, in step 622, to acknowledge the HTTP post of step 614.

A second event occurs in the incoming call in step 622. For example, a spoken phrase or gesture is detected in a media stream of the incoming call. This results in the cloud service 130 sending (based on defined rules) an HTTP POST with the event to the bridge 131 in step 624. The bridge 131 places the event in the event queue 133 for the clustered application 122 (the same clustered application 122) in step 626. The clustered application 122 sends another long poll HTTP GET in step 628 (in one embodiment, this may be a long poll HTTP POST request). In response to receiving the long poll HTTP GET of step 628, the bridge takes the event (of the HTTP POST of step 624) that in the event queue 133 and sends the event in a 200 OK message to the clustered application 122 in step 632. The clustered application then processes the event in step 634. The bridge 131 also sends a 200 OK to the cloud service 130, in step 636, to acknowledge the HTTP POST of step 624.

In one embodiment, the HTTP POST of step 624 may be sent after the long poll HTTP GET of step 628. In this embodiment, step 626 would occur after step 628.

The process of Fig. 6 is described where the cloud service 130 requests a directive from the clustered application 122 by sending data in XML. In one embodiment, the cloud service 130 may only send the event in the HTTP post of step 606 and not any XML data. In this exemplary embodiment, the cloud service 130 is not expecting to receive any XML data in the 200 OK of step 618. For example, the HTTP POST of step 606/200 OK of step 610 may be to notify the clustered application 122 that the incoming call of step 602 is from a specific caller that the clustered application 122 is tracking. In this example, the HTTP POST (or an HTTP GET) of step 614 does not contain any XML data. Likewise, the 200 OK of step 618 does not contain any XML data.

In one embodiment, the mere presence of the XML data (not necessarily the XML data itself) in the 200 OK of step 610 indicates to the clustered application 122 that a response is necessary. For example, the XML data may only comprise tags with no data. In this case, the clustered application 122 already knows what data is to be sent based on the type of event. Alternatively, the XML data itself may indicate what data the clustered application 122 is to send in the HTTP POST message of step 614.

The process of Fig. 6 is described for a single clustered application 122. However, one of skill in the art would understand that the process of Fig. 6 is also designed to work with multiple clustered applications 122. For example, multiple clustered applications 122 may provide services for multiple incoming calls in parallel.

In addition, the process of Fig. 6 can work with different clustered applications 1122 in different enterprise data centers 120. In this embodiment, the bridge 131 may identify an individual enterprise data center 120 based on the type of event or based on an identifier for the enterprise data center in the HTTP POST of step 606. The clustered application responds in step 614 using the enterprise data center identifier.

Examples of the processors as described herein may include, but are not limited to, at least one of Qualcomm® Snapdragon® 800 and 801, Qualcomm® Snapdragon® 610 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

Any of the steps, functions, and operations discussed herein can be performed continuously and automatically.

However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should however be appreciated that the present disclosure may be practiced in a variety of ways beyond the specific detail set forth herein.

Furthermore, while the exemplary embodiments illustrated herein show the various components of the system collocated, certain components of the system can be located remotely, at distant portions of a distributed network 110, such as a LAN and/or the Internet, or within a dedicated system. Thus, it should be appreciated, that the components of the system can be combined in to one or more devices or collocated on a particular node of a distributed network, such as an analog and/or digital telecommunications network, a packet-switch network, or a circuit-switched network. It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the disclosure.

A number of variations and modifications of the disclosure can be used. It would be possible to provide for some features of the disclosure without providing others.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as program embedded on personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the embodiments with reference to particular standards and protocols, the disclosure is not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various embodiments, configurations, and aspects, includes components, methods, processes, systems and/or apparatus substantially as depicted and described herein, including various embodiments, subcombinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease and\or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights which include alternative embodiments, configurations, or aspects to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A system comprising:
a microprocessor; and
a computer readable medium, coupled with the microprocessor and comprising microprocessor readable and executable instructions that program the microprocessor to execute:
a queue manager that receives a plurality of long poll Hyper Text Transfer Protocol, HTTP, requests from a plurality of clustered applications, wherein the plurality of long poll HTTP requests comprises a plurality of identifiers for the plurality of clustered applications, creates a plurality of event queues for the plurality of clustered applications based on the plurality of identifiers, adds a plurality of events to the plurality of event queues based on a plurality of communication sessions, and sends, based on the plurality of events in the plurality of event queues, a plurality of responses to the plurality of long poll HTTP requests that comprise the plurality of events.

2. The system of claim 1, wherein the queue manager receives, from a cloud service, an HTTP POST that comprises an event for an individual communication session of the plurality of communication sessions, wherein the queue manager identifies an individual event queue for an individual clustered application using an identifier of the individual communication session of the plurality of communication sessions.

3. The system of claim 2, wherein the HTTP POST also comprises at least one of Extended Markup Language, XML, and JavaScript Object Notation, JSON, data and wherein presence of the XML/JSON data indicates that the cloud service is expecting a response message with data from the individual clustered application.

4. The system of any one of claims 1 to 3, wherein an individual event queue of the plurality of event queues comprises a plurality of events for an individual communication session of the plurality of communication sessions and wherein the queue manager sends the plurality of events to the clustered application in a single message.

5. The system of any one of claims 1 to 4, wherein an individual event queue of the plurality of event queues comprises a plurality of events for an individual communication session and wherein and wherein the queue manager only sends a portion of the plurality of events in the
event queue for the individual communication session in a single message based on a maximum number of events to send for the individual communication session.

6. The system of any one of claims 1 to 5, wherein the plurality of event queues comprise a first event queue and a second event queue, wherein the first event queue comprises a plurality of events associated with a first communication session, wherein the second event queue comprises a plurality of events associated with a second communication session, wherein the first event queue has a first maximum number of events that can be sent in response to a first long poll HTTP GET request, wherein the second event queue has a second maximum number of events that can be sent in response to a second long poll HTTP GET request, and wherein the first maximum number of events is different from the second maximum number of events.

7. The system of any one of claims 1 to 6, further comprising an enterprise data center, wherein the enterprise data center comprises the plurality of clustered applications and wherein the plurality of cluster applications:
sends the plurality of long poll HTTP requests;
receives the plurality of responses; and
implements a plurality of actions based on the received plurality of responses.

8. The system of claim 7, wherein each the plurality of event queues are associated with an individual clustered application of the plurality of clustered applications and wherein each of the plurality of communication sessions are associated with an individual event queue and individual clustered application.

9. A method comprising:
receiving, by a microprocessor, a plurality of long poll Hyper Text Transfer Protocol, HTTP, GET requests from a plurality of clustered applications, wherein the plurality of long poll HTTP requests comprises a plurality of identifiers for the plurality of clustered applications;
creating, by the microprocessor, a plurality of event queues for the plurality of clustered applications based on the plurality of identifiers;
adding, by the microprocessor, a plurality of events to the plurality of event queues based on a plurality of communication sessions; and
sending, by the microprocessor, based on the plurality of events in the plurality of event queues, a plurality of responses to the plurality of long poll HTTP requests that comprise the plurality of events.

10. The method of claim 9, wherein the microprocessor receives, from a cloud service, an HTTP POST that comprises an event for an individual communication session of the plurality of communication sessions, wherein the microprocessor identifies an individual event queue for an individual clustered application using an identifier of the individual communication session of the plurality of communication sessions.

11. The method of claim 10, wherein the HTTP POST also comprises at least one of Extended Markup Language, XML, and JavaScript Object Notation, JSON), data and wherein presence of the XML/JSON data indicates that the cloud service is expecting a response message with data from the individual clustered application.

12. The method of any one of claims 9 to 11, wherein an individual event queue of the plurality of event queues comprises a plurality of events for an individual communication session of the plurality of communication sessions and wherein the microprocessor sends the plurality of events to the clustered application in a single message.

13. The method of any one of claims 9 to 12, wherein an individual event queue of the plurality of event queues comprises a plurality of events for an individual communication session and wherein and wherein the microprocessor only sends a portion of the plurality of events in the event queue for the individual communication session in a single message based on a maximum number of events to send for the individual communication session.

14. The method of any one of claims 9 to 13, wherein the plurality of event queues comprise a first event queue and a second event queue, wherein the first event queue comprises a plurality of events associated with a first communication session, wherein the second event queue comprises a plurality of events associated with a second communication session, wherein the first event queue has a first maximum number of events that can be sent in response to a first HTTP GET request, wherein the second event queue has a second maximum number of events that can be sent in response to a second HTTP GET request, and wherein the first maximum number of events is different from the second maximum number of events.

15. The method of any one of claims 9 to 14, further comprising an enterprise data center, wherein the enterprise data center comprises the plurality of clustered applications and wherein the plurality of cluster applications:
sends the plurality of long poll HTTP requests;
receives the plurality of responses; and
implements a plurality of actions based on the received plurality of responses.
